# EUROPÄISCHE PATENTANMELDUNG

(11) **EP 2 689 927 A1**
(43) Veröffentlichungstag der Anmeldung: **29.01.2014**
(21) Anmeldenummer: 12177966.4
(22) Anmeldetag: 26.07.2012
(51) Int. Cl.: B32B 27/10, B32B 27/34, B32B 27/32, B32B 27/08, B32B 15/20, B32B 15/08, B32B 7/12, B32B 3/28, B32B 29/08

(54) **Verpackungsmaterial mit einer Barrierelage**

(60) Teilanmeldung: 13152799.6
(71) Anmelder: Mondi AG, 1032 Wien (AT)
(72) Erfinder: Rosenwirth, Johannes, A-9500 Villach (AT); Betz, Jürgen, D-41569 Rommerskirchen (DE); Grossegger, Josef, A-8740 Zeltweg (AT)
(74) Vertreter: Schneider, Michael

(57) **Zusammenfassung**

Verpackungsmaterial (1), aufweisend zumindest eine **Trägerlage** als Papierlage (2) und eine **Mineralöl-Barrierelage** als Polyamidlage (3).

## Beschreibung

### TECHNISCHES FELD

Die Erfindung betrifft ein Verpackungsmaterial.

Die Erfindung betrifft weiterhin ein Herstellungsverfahren zur Herstellung von besagtem Verpackungsmaterial.

Die Erfindung betrifft weiterhin eine Wellpappe aufweisend besagtes Verpackungsmaterial.

Die Erfindung betrifft weiterhin ein Verpackungssystem aufweisend eine Primärverpackung aus besagtem Verpackungsmaterial und eine Sekundärverpackung.

Die Erfindung betrifft ein Lebensmittel verpackt mit besagtem Verpackungsmaterial.

### HINTERGRUND

Bereits in den 1990ern wurde vom kantonalen Labor Zürich Mineralöl in verschiedenen Nahrungsmitteln und sogar in der Muttermilch und im menschlichen Fettgewebe festgestellt. Es wurden unerwünschte und sogar bedenkliche Stoffe (MOAH, mineral oil aromatic hydrocarbons; MOSH, mineral oli saturated hydrocarbons) erkannt. Als Quelle des Mineralöls wurde hauptsächlich Druckfarbe identifiziert, die für den Druck von Magazinen und/oder Zeitungen zur Anwendung kommt. Das Mineralöl der Druckfarben kommt über den Recyclingkreislauf des Papiers, aus dem die Magazine und Zeitungen bestehen, in Verpackungsmaterialien für Lebensmittel, insbesondere Kartonverpackungen. Während der Lagerung der Lebensmittel in einer mit Hilfe solcher Verpackungsmaterialien gefertigten Verpackung gelangt das Mineralöl über seine Gasphase von der Verpackung in die Lebensmittel. Es existieren verschiedenste Lösungsansätze, um dieses Problem zu umgehen, wie z.B. die Verwendung von nicht recyceltem Papier (also Papier aus Primärzellstoff), die Verwendung von mineralölfreien Druckfarben, die Anwendung von Reinigungsprozessen zum Entfernen von Mineralölanteilen aus dem recycelten Papier, sowie die Entfernung von mineralölhaltigen Druckfarben enthaltendem Papier als dem Rohmaterial für Karton/Papier, der/das mit Lebensmitteln in direktem Kontakt steht. Diese Lösungsansätze scheitern jedoch aus politischen oder kommerziellen Gründen wie auch aus Gründen der Komplexität.

Es besteht daher ein Bedürfnis an Verpackungen, welche die Migration des Mineralöls von der Verpackung in ein damit verpacktes Lebensmittel verhindern oder zumindest zuverlässig in akzeptablen Grenzen hält.

Es ist daher eine Aufgabe der Erfindung, ein verbessertes Verpackungsmaterial und eine verbesserte Verpackung bereitzustellen, um das vorstehend genannte Bedürfnis zu befriedigen.

### ZUSAMMENFASSUNG DER ERFINDUNG

Diese Aufgabe wird durch ein Verpackungsmaterial gemäß Anspruch 1, ein Herstellungsverfahren gemäß Anspruch 9, eine Wellpappe gemäß Anspruch 13, ein Verpackungssystem gemäß Anspruch 16, und ein Lebensmittel verpackt mit dem erfindungsgemäßen Verpackungsmaterial gemäß Anspruch 17 gelöst.

Der Gegenstand der Erfindung ist daher ein Verpackungsmaterial aufweisend zumindest eine Trägerlage als Papierlage und eine Mineralöl-Barrierelage als Polyamidlage.

Zudem ist der Gegenstand der Erfindung ein Herstellungsverfahren zur Herstellung eines Verpackungsmaterials, wobei benachbart zu zumindest einer Trägerlage als Papierlage eine Mineralöl-Barrierelage als Polyamidlage hergestellt wird.

Zudem ist der Gegenstand der Erfindung eine Wellpappe aufweisend zumindest eine Lage eines erfindungsgemäßen Verpackungsmaterials, wobei das Verpackungsmaterial zumindest eine Trägerlage als Papierlage und eine Mineralöl-Barrierelage als Polyamidlage aufweist.

Zudem ist der Gegenstand der Erfindung ein Verpackungssystem aufweisend eine Primärverpackung, die aus dem erfindungsgemäßen Verpackungsmaterial hergestellt ist und ein Produkt hermetisch dicht verpackt, wobei das Verpackungsmaterial zumindest eine Trägerlage als Papierlage und eine Mineralöl-Barrierelage als Polyamidlage aufweist, und eine die Primärverpackung zumindest bereichsweise umschließende Sekundärverpackung, insbesondere eine Sekundärverpackung aufweisend einen Anteil an migrationsfähigem Mineralöl.

Zudem ist der Gegenstand der Erfindung ein Lebensmittel verpackt mit einem erfindungsgemäßen Verpackungsmaterial, wobei das Verpackungsmaterial zumindest eine Trägerlage als Papierlage und eine Mineralöl-Barrierelage als Polyamidlage aufweist.

Die Polyamidlage kann z.B. aus Polyamid 6 bestehen.

Bei dem Herstellungsverfahren wird die Polyamidlage entweder durch die Verwendung einer Polyamid-Folie als Polyamidlage oder durch Herstellung einer Polyamid-Extrusionsbeschichtung als Polyamidlage realisiert. Dabei kann die Polyamid-Folie oder die extrusionsbeschichtete PA-Lage entweder direkt benachbart zu der Papierlage oder indirekt benachbart - also im Abstand einer Anzahl an weiteren Lagen - zu der Papierlage in dem Verpackungsmaterial lokalisiert werden. Im Fall der Polyamid-Folie kann die Polyamid-Folie mit der Papierlage oder den weiteren Lagen zum Beispiel kleberkaschiert oder extrusionskaschiert werden. Im Fall der extrusionsbeschichteten Polyamidlage kann die Polyamidlage direkt auf die Papierlage oder auf eine weitere Lage aufgebracht werden oder als mit anderen Lagen co-extrudierte Polyamidlage direkt auf die Papierlage oder eine weitere Lage aufgebracht werden.

Die Erfindung betrifft somit die Verwendung einer Polyamidlage in Kombination mit Papier zwecks Erzielung einer Mineralöl-Barriere in einer leichten und flexiblen Verpackung. Durch die Maßnahmen der Erfindung ist der Vorteil erhalten, dass ein leichtes und flexibel einsetzbares Verpackungsmaterial auf Papierbasis - folglich auch alle daraus hergestellten Verpackungsbehältnisse - eine ausreichend hohe Barriere gegenüber einer Mineralölmigration aufweist. Die Herstellung eines solchen Verpackungsmaterials ist relativ einfach und kostengünstig. Diese erfindungsgemäße Lösung einer Polyamidlage in Kombination mit Papier erlaubt auch den Verzicht auf oder Ersatz von zum Beispiel PET-Laminaten, Aluminium-Laminaten, PE-EVOH-Laminaten, PVDC Beschichtungen, lackierte OPP-Filme und Biopolymere. Im Vergleich zu den vorgenannten Lösungsansätzen sind durch die erfindungsgemäße Lösung neben der Mineralölbarriere teilweise auch verbesserte mechanische Eigenschaften erhalten, wie z.B. eine erhöhte Durchstoßfestigkeit, eine höhere Rissfestigkeit und verbesserte Abriebbeständigkeit. Wegen der hohen Temperaturbeständigkeit des Polyamid (PA) ist das mit PA beschichtete Papier auch für die Verwendung in Maschinen für die Herstellung von Wellpappe bzw. die Herstellung von Verpackungen aus Wellpappe (Wellpappe-Verpackungen) geeignet.

Bei dem erfindungsgemäßen Verpackungssystem kann das migrationsfähige Mineralöl z.B. durch einen Anteil an mineralölhaltigem Zellstoff vorliegen oder durch mineralölhaltige Farben, mit welchen ein Druckbild realisiert ist, vorliegen. Solch eine Situation kann dann gegeben sein, wenn eine aus Wellpappe gefertigte Verpackung mehrere kleinere Verpackungen - sogenannte "Portions" Verpackungen - verpackt. Die aus Wellpappe gefertigte Verpackung kann das migrationsfähige Mineralöl aufweisen, wohingegen die aus dem erfindungsgemäßen Verpackungsmaterial gefertigten Verpackungen die nötige Mineralölbarriere aufweisen.

Weitere, besonders vorteilhafte Ausgestaltungen und Weiterbildungen der Erfindung ergeben sich aus den abhängigen Ansprüchen sowie der nachfolgenden Beschreibung. Dabei kann das Herstellungsverfahren, die Wellpappe, wie auch das Verpackungssystem entsprechend den abhängigen Ansprüchen zum Verpackungsmaterial weitergebildet sein. Vorteile, die im Zusammenhang mit dem Anspruch einer Kategorie oder eines Gegenstands erörtert wurden, gelten analog auch für jene der anderen Kategorie oder des anderen Gegenstands.

Gemäß einem Aspekt der Erfindung kann in dem Verpackungsmaterial eine einzige Lage Papier mit einer einzigen Lage Polyamid enthalten sein. Das Verpackungsmaterial kann auch nur ausschließlich diese beiden Lagen aufweisen. Gemäß einer anderen Ausbildungsform kann die PA-Lage zwischen zwei Papierlagen angeordnet sein, also eine Sandwichstruktur vorliegen. Die Polyamidlage ist dann eingebettet zwischen eine erste Papierlage und eine zweite Papierlage. Solche Strukturen finden ihre bevorzugte Anwendung z.B. bei "case liner" (Decklage bei Wellpappe) oder bei der Verpackung von z.B. Gelierzucker, Speisesalz, usw.. Die dem Produkt zugewandte Papierlage ist jedenfalls mineralölfrei.

Die Verwendung von Papier und extrudiertem PA erlaubt die Realisierung eines bahnartigen Verpackungsmaterials (zur Verwendung bzw. Verarbeitung von der Rolle) in einem weiten Bereich der flächenbezogenen Masse (Grammatur) von Papier bis hin zu Pappe. Gemäß diesem Aspekt der Erfindung weist die Papierlage eine flächenbezogene Masse - von 20 g/m^2 bis 120 g/m^2 auf und/oder die Polyamidlage eine flächenbezogene Masse von 5 g/m^2 bis 40 g/m^2 auf.

Das Verpackungsmaterial kann um ein zu verpackendes Produkt gefaltet werden und gegenüberliegende Ränder des Verpackungsmaterials können mit Hilfe von Klebstoff miteinander verklebt werden. Gemäß einem weiteren Aspekt der Erfindung weist das Verpackungsmaterial an seiner Außenseite eine Siegellage, insbesondere durch eine Polyolefin-Schicht gebildet, auf. Im Unterschied zu einer Faltschachtel, die an ihren stirnseitigen Enden des Recycling-Kartons oder der -Wellpappe, aus der sie gefertigt ist, in der Regel nicht dicht in Bezug auf die Diffusion des in ihr enthaltenen Mineralöls ist, kann nun eine in Bezug auf das im Karton der Faltschachtel enthaltene Mineralöl hermetisch dichte beutelartige Verpackung durch zum Beispiel einfaches Heißversiegeln von unterschiedlichen Bereiche der siegelbaren Lage erzielt werden. Diese Siegelfähigkeit erlaubt einen weiten Einsatzbereich des Verpackungsmaterials und somit die Realisierung von an Kundenwünsche angepasste und maßgeschneiderte Verpackungslösungen, wie z. B. relativ kleine oder auch große Beutel oder Säcke. Die Siegellage wird an jener für den Produktkontakt bestimmten Seite des Verpackungsmaterials ausgebildet. Zwischen der Papierlage und der Siegellage kann die Polyamidlage lokalisiert sein, so dass die Polyamidlage den gesamten Packgutraum umschließt, wenn ein Packgut mit dem Verpackungsmaterial umhüllt ist und die aufeinander gelegten Ränder des Verpackungsmaterials miteinander zum Beispiel (heiß-)versiegelt sind.

Hinsichtlich der Siegellage können unterschiedliche Ausbildungsformen zum Einsatz kommen.

Es kann die Siegellage direkt auf die Papierlage aufgebracht sein. Die Siegellage wird direkt benachbart zu der Papierlage realisiert. Dabei ist eine Seite der Papierlage der PA-Lage zugewandt und die andere Seite der Papierlage ist der Siegellage zugewandt. In diesem Fall kann die PA-Lage auch als Außenlage einer Verpackung dienen und dort zusätzlich zu ihrer Mineralölbarriere eine Sauerstoffbarriere realisieren und wegen ihrer glatten Oberfläche eine verbesserte Druckqualität ermöglichen, als dies bei einer Papieraußenlage der Fall wäre. Zudem ist der Vorteil erhalten, dass zwischen der Papier- und der Siegellage kein Haftvermittler nötig ist.

Es kann die Siegellage jedoch auch mit Hilfe einer Haftvermittlerlage, insbesondere mit einer flächenbezogenen Masse von 2 g/m^2 bis 3 g/m^2, an der Polyamidlage anhaften. Dabei wird die Siegellage mit Hilfe der Haftvermittlerlage an der Polyamidlage angeklebt, wobei die Polyamidlage, die Haftvermittlerlage und die Siegellage zum Beispiel durch Co-Extrusion erzeugt werden. Als Haftvermittlerlage können z. B. Polyethylen-basierende Terpolymere zum Einsatz kommen. Eine solche Siegellage weist bevorzugt eine Dampf-/Feuchtigkeitsbarriere auf. Diese Eigenschaft der Sieggelage kann genutzt werden, um die PA-Lage vor Feuchtigkeit zu schützen, wenn z.B. die Sieggelage zwischen der PA-Lage und der Feuchtgkeitsquelle lokalisiert ist oder die PA-Lage zwischen zwei Polyolefinlagen eingebettet ist. Hierbei kann z.B. eine Struktur aus einer Außenlage als Papierlage, eine daran anschließende PA-Lage als eine Mineralölbarriere und eine daran anschließende Haftvermittlerlage und eine daran anschließende Polyolefinlage als Siegellage hergestellt werden. Die Polyamidlage, die Haftvermittlerlage und die Siegellage werden auf vorteilhafte Weise durch Co-Extrusion erzeugt und auf einer einzigen der beiden Seiten der Papierlage aufgebracht.

Es kann die Siegellage jedoch auch an einer weiteren Lage, bevorzugt mit Hilfe einer Haftvermittlerlage anhaften. Eine solche Struktur kann z.B. als eine äußere Lage des Verpackungsmaterials eine PA-Lage aufgebracht auf einer Papierlage aufweisen, wobei die Papierlage im Inneren des Verpackungsmaterials lokalisiert ist. Neben der Papierlage kann eine Klebestofflage aufgebracht auf der Papierlage existieren, auf der besagte weitere Lage aufgeklebt ist. Benachbart zu der weiteren Lage ist dann besagte Siegellage ausgebildet. Die Verbindung zwischen der weiteren Lage und der Siegellage kann grundsätzlich ohne Haftvermittlerlage realisiert sein. Um jedoch eine bessere Haftung zu realisieren, kann eine Haftvermittlerlage aus z.B. PE basierendem Copolymer zwischen der weiteren Lage und der Siegellage ausgebildet sein. Die Haftvermittlerlage und die Siegellage können miteinander co-extrudiert werden. Die weitere Lage kann z.B. durch eine Polyester- oder Polypropylenfolie gebildet sein.

Gemäß einem weiteren Aspekt ist zusätzlich zu der Papierlage und der Polyamidlage - oder Polyamidcoextrusion (Mehrlagenstruktur) - eine Metalllage, insbesondere als Aluminiumfolie bzw. Aluminiumlage ausgebildet. Diese Kombination aus Metalllage und Polyamidlage erhöht die Sicherheit in Bezug auf die Funktion der Mineralölbarriere. Grundsätzlich hat auch die Metalllage eine akzeptable Wirkung als Mineralölbarriere, wobei die Metalllage mitunter zum Brechen oder Einreißen tendiert. Diese materialspezifischen Nachteile der Metalllage werden durch die zusätzliche PA-Lage entschärft, da selbst bei einem Bruch oder Einriss die PA-Lage die geforderte Mineralölbarriere bereitstellt. Eine solche Struktur kann z.B. als eine äußere Lage des Verpackungsmaterials eine PA-Lage aufgebracht auf einer Papierlage aufweisen, wobei die Papierlage im Inneren des Verpackungsmaterials lokalisiert ist. Neben der Papierlage kann eine Klebestofflage aufgebracht auf der Papierlage existieren, auf der eine Aluminiumfolie bzw. -lage aufgeklebt ist. Benachbart zu der Aluminiumfolie ist dann besagte Siegellage ausgebildet. Die Verbindung zwischen Aluminiumfolie und Siegellage kann grundsätzlich ohne Haftvermittlerlage realisiert sein. Um jedoch eine bessere Haftung zu realisieren, kann eine Haftvermittlerlage aus z.B. PE basierendem Copolymer zwischen der Aluminiumfolie und der Siegellage ausgebildet sein. Die Haftvermittlerlage und die Siegellage können miteinander co-extrudiert werden.

Gemäß einem weiteren Aspekt der Erfindung ist zwischen die Papierlage und die Polyamidlage eine Feuchtigkeits-Barrierelage, bevorzugt als Kunststofflage, insbesondere bevorzugt als Polyolefinlage integriert. Mit diesem Aspekt geht der Vorteil einher, dass Feuchtigkeit, die von der Seite der Papierlage her in das Verpackungsmaterial eindringt, von der feuchtigkeitsempfindlichen PA-Lage abgehalten wird.

Wie vorangehend erörtert sind verschiedene Konstellationen aus PA-Lage und Papierlage(n) möglich. Wenn z.B. die PA-Lage in Bezug auf eine einzige Papierlage hin zu dem verpackten Produkt orientiert ist, kann diese Papierlage aus mineralölhaltigem Recycling-Papier hergestellt sein. Ist demgegenüber jedoch die einzige Papierlage in Bezug auf die PA-Lage dem Produkt zugewandt, muss die Papierlage mineralölfrei, bevorzugt hergestellt aus Primärfaser sein. Im Fall der in zwei Papierlagen eingebetteten PA-Lage muss zumindest jene in Bezug auf die PA-Lage zu dem Produkt hin orientierte Papierlage mineralölfrei, bevorzugt hergestellt aus Primärfaser sein. Die andere Papierlage kann, muss jedoch nicht frei von Mineralöl sein. Da jedoch die Verarbeitung des erfindungsgemäßen Verpackungsmaterials bevorzugt auf Basis von Rollenware erfolgt, ist es von Vorteil, wenn alle Papierlagen in der Rollenware mineralölfrei, bevorzugt hergestellt aus Primärfaser sind, so dass eine ungewollte, nämlich selbstverursachte Mineralöl-Kontamination von Flächen des Verpackungsmaterials, die mit dem Produkt in Kontakt kommen, zuverlässig vermieden ist.

Wie Eingangs erörtert betrifft die Erfindung auch eine Wellpappe mit Mineralöl-Barrierelage.

Gemäß einem Aspekt der Erfindung kann die Wellpappe zum Beispiel eine erste, ebene Lage, und eine zweite, gewellte Lage, und eine dritte, ebene Lage gebildet aus dem Verpackungsmaterial aufweisen. Bei dieser Ausbildungsform werden die erste und die zweite Lage der Wellpappe miteinander an ihren Berührungspunkten- bzw. bereichen verklebt. Die dritte Lage gebildet aus dem Verpackungsmaterial ist jene Lage, die bei einer Wellpappe-Verpackung zu dem verpackten Produkt hin orientiert ist. In einer Variante wird das Verpackungsmaterial zugeführt und es kann z.B. die Papierlage des Verpackungsmaterials mit der zweiten Lage der Wellpappe in ihren Berührungspunkten bzw. -bereichen verklebt werden. Die Papierlage kann hierbei mineralölhaltig realisiert werden, weil die Polyamidlage, also die Mineralöl-Barrierelage zu dem verpackten Produkt hinweist. In einer anderen Variante kann z.B. die Siegellage des Verpackungsmaterials mit der zweiten Lage der Wellpappe in ihren Berührungspunkten bzw. -bereichen verschmolzen (versiegelt) werden, insbesondere unter Ausnutzung der beim Herstellungsprozess der Wellpappe herrschenden Temperatur. Je nach Position der Papierlage in Bezug auf die Mineralöl-Barrierelage kann diese mineralölhaltig (wenn die Mineralöl-Barrierelage zwischen der Papierlage und dem zu verpackenden Produkt lokalisiert ist) oder muss diese mineralölfrei ausgeführt sein (wenn die Papierlage zwischen der Mineralöl-Barrierelage und dem zu verpackenden Produkt lokalisiert ist).

Gemäß einem weiteren Aspekt der Erfindung kann die Wellpappe eine erste, ebene Lage, und eine zweite, gewellte Lage gebildet aus dem Verpackungsmaterial, und eine dritte, ebene Lage aufweisen. Hierbei wird eine äußerer Lage der Wellpappe, z.B. die dritte Lage, die dem zu verpackenden Produkt zugewandt ist, immer aus mineralölfreiem Zellstoff und auch frei von mineralölhaltiger Farbe sein. Bei der Herstellung der Wellpappe wird zu der ersten Lage die zweite Lage in Form des gewellte Verpackungsmaterials zugeführt und mit der ersten Lage verbunden, z.B. durch Verkleben der Papierlage des Verpackungsmaterials mit der ersten Lage an ihren Berührungspunkten bzw. -bereichen. Die dritte Lage der Wellpappe wird ebenfalls zugeführt und je nach Beschaffenheit entweder mit der zweiten Lage durch Verschmelzen mit der Siegellage des Verpackungsmaterials oder durch Verkleben verbunden.

Gemäß einem weitern Aspekt der Erfindung kann die Wellpappe eine erste, ebene Lage, und eine zweite, gewellte Lage gebildet aus dem Verpackungsmaterial, und eine dritte, ebene Lage gebildet aus dem Verpackungsmaterial aufweisen. In diesem Fall ist es von Vorteil, wenn die Trägerlage(n) des bei der dritten Lage zur Anwendung kommenden Verpackungsmaterials aus Primärzellstoff hergestellt ist. Gleiches gilt für die Trägerlage des bei der zweiten Lage zur Anwendungen kommenden Verpackungsmaterials, wenn diese Trägerlage in Bezug auf die Polyamidlage dem verpackten Produkt zugewandt ist. Die Verwendung des erfindungsgemäßen Verpackungsmaterials für zwei Lagen (die zwei inneren Lagen einer Wellpappe-verpackung) der Wellpappe ist dann von Vorteil, wenn bei rauen Transportbedingungen mit einer Beschädigung der inneren Lage der Wellpappe-Verpackung zu rechnen ist.

Wie eingangs erörtert, erlaubt die Erfindung zudem die Realisierung eines Verpackungssystems. Bei der Sekundärverpackung handelt es sich zum Beispiel um eine aus Recyclingkarton oder Wellpappe gefertigte Schachtel, die eine Quelle für die Mineralölabgabe darstellt. Die Innenverpackung - bevorzugt in Form eines Beutels gefertigt aus besagtem, erfindungsgemäßem Verpackungsmaterial - schütz das damit direkt verpackte Produkt, insbesondere das Lebensmittel vor dem aus der Primärverpackung stammenden Mineralöl.

### FIGURENKURZBESCHREIBUNG

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugsziffern versehen. Es zeigen auf schematische Weise:
- Fig. 1 - 5: einen Querschnitt durch ein erfindungsgemäßes Verpackungsmaterial gemäß einem ersten bis fünften Ausführungsbeispiel;
- Fig. 6 - 7: einen Querschnitt durch eine erfindungsgemäße Wellpappe gemäß einem ersten und einem zweiten Anwendungsbeispiel;
- Fig. 8: einen Querschnitt durch ein erfindungsgemäßes Verpackungssystem;
- Fig. 9 - 10: auf analoge Weise wie die Figuren 6 und 7 ein drittes und viertes Ausführungsbeispiel einer erfindungsgemäßen Wellpappe.

### BESCHREIBUNG DER AUSFÜHRUNGSBEISPIELE

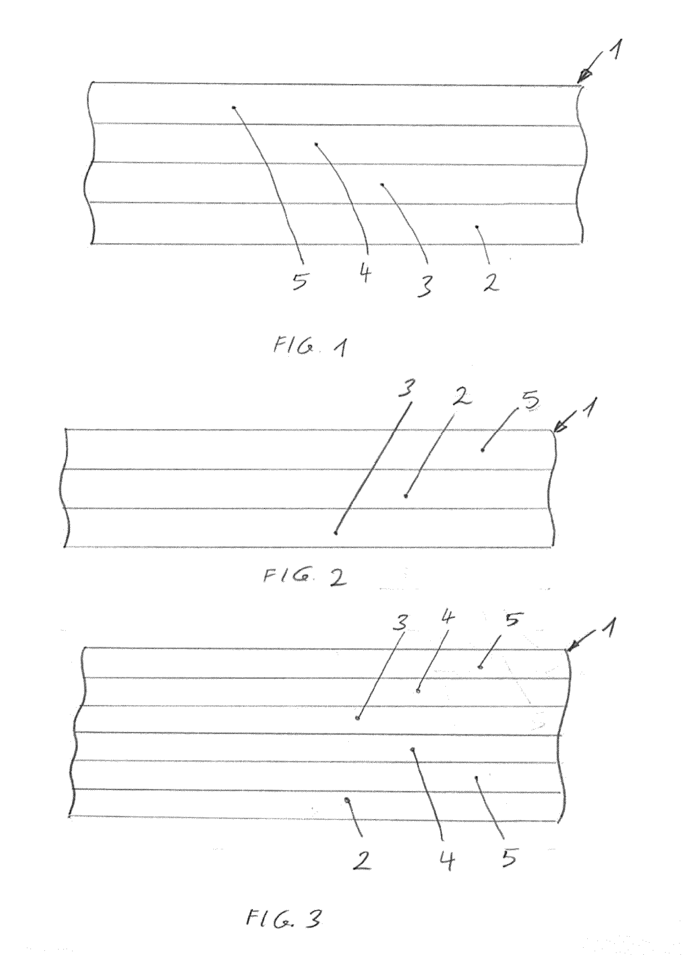

Fig. 1 zeigt ein erstes Ausführungsbeispiel für ein erfindungsgemäßes Verpackungsmaterial 1, wobei eine Lagenstruktur betrachtet von unten nach oben aufweisend eine Papierlage 2 als Trägerlage, Polyamidlage 3 als Mineralöl-Barrierelage, eine Haftvermittlerlage 4 und eine Polyolefin-Schicht 5 als Siegellage dargestellt ist. Ein mit dem Verpackungsmaterial 1 verpacktes Produkt (nicht dargestellt) kann auf der Seite der Polyolefin-Schicht 5 lokalisiert sein.

Fig. 2 zeigt in Form eines zweiten Ausführungsbeispiels des Verpackungsmaterials 1 eine Lagenstruktur betrachte von unten nach oben aufweisend die Polyamidlage 3, die Papierlage 2 und die Polyolefin-Schicht 5. Im Unterschied zu der Fig. 1 weist die Fig. 2 keine Haftvermittlerlage 4 auf. Soweit die Papierlage 2 mineralölfrei ist, kann ein mit dem Verpackungsmaterial 1 verpacktes Produkt (nicht dargestellt) auf der Seite der Polyolefin-Schicht 5 lokalisiert sein.

Fig. 3 zeigt in Form eines dritten Ausführungsbeispiels des Verpackungsmaterials 1 eine zu der Fig. 1 ähnliche Lagenstruktur, wobei betrachtet von unten nach oben zwischen der Papierlage 2 und der Polyamidlage 3 eine weitere Polyolefin-Schicht 5 (allgemein Kunststoffschicht) als Feuchtigkeitsschutzschicht für die Polyamidlage 3 und eine weitere Haftvermittlerschicht 4 zum Haftvermitteln zwischen der weiteren Polyolefin-Schicht 5 und der Polyamidlage 3 ausgebildet ist.

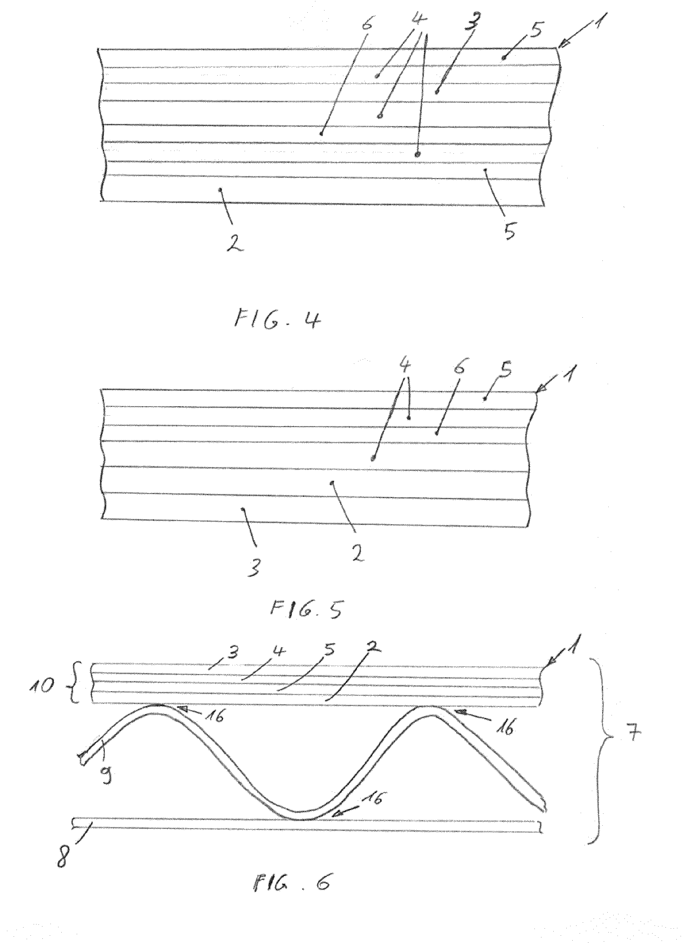

Fig. 4 zeigt in Form eines vierten Ausführungsbeispiels des Verpackungsmaterials 1 eine zu der Fig. 1 ähnliche Lagenstruktur, wobei betrachtet von unten nach oben zwischen der als Außenlage dienenden Papierlage 2 und der ebenfalls als Außenlage dienenden Polyolefinlage 5 eine an die Papierlage 2 anschließende Polyolefinlage 5, eine daran anschließende Haftvermittlerlage 4 - wie z.B. eine PE basierende Copolymer Lage - und eine daran anschließende Aluminiumfolie 6, sowie eine daran anschließende weitere Haftvermittlerlage 4 - z.B. eine PE basierende Terpolymer-Lage - und die daran anschließende PA-Lage 3 und eine daran anschließende weitere Haftvermittlerlage 4 - z.B. eine PE-basierende Terpolymer-Lage - ausgebildet ist. Dieses Verpackungsmaterial 1 eignet sich besonders für die Verpackung von kantigem oder spitzem Packgut, wie z.B. Nudeln. Hierbei bildet die PolyamidLage 3 eine zusätzlich zu der Aluminiumfolie 6 vorgesehene zweite Mineralölbarriere mit hoher Durchstoßfestigkeit. Es sei erwähnt, dass die Haftvermittlerlage 4 auch aus identischen Stoffen hergestellt sein kann.

Fig. 5 zeigt in Form eines fünften Ausführungsbeispiels des Verpackungsmaterials 1 eine zu der Fig. 2 ähnliche Lagenstruktur, wobei betrachtet von unten nach oben zwischen der Papierlage 2 und der siegelfähigen Polyolefin-Schicht 5 eine Haftvermittler- bzw. Kleberschicht 4, eine daran anschließende Aluminiumfolie 6 und eine daran anschließende weitere Haftvermittlerlage 4 ausgebildet ist.

Fig. 6 zeigt eine Lagenstruktur eines ersten Ausführungsbeispiels für eine Wellpappe 7. Die Wellpappe 7 weist eine erste, ebene Papier- bzw. Kartonlage 8, eine zweite, gewellte Papier- bzw. Kartonlage 9 und eine dritte, ebene Lage 10 gebildet aus dem Verpackungsmaterial 1 gemäß einem weiteren Ausführungsbeispiel auf. Hierbei weist das Verpackungsmaterial 1 eine Lagenstruktur betrachtet von unten nach oben aufweisend die Papierlage 2, die daran anschließende Polyolefin-Schicht 5, die daran anschließende Haftvermittlerschicht 4, sowie die Polyamidlage 3 als Außenalge auf. Die erste und die zweite Lagen 8, 9 kann aus Recycling-Papier gefertigt sein, also Mineralöl aufweisen. Hierbei ist von Vorteil, dass die Polyolefin-Schicht 5 eingebettet im Inneren des Verpackungsmaterial 1 ist, wodurch die Polyolefin-Schicht 5 vor direkter Hitzeeinwirkung im Herstellungsprozess der Wellpappe 7 weitgehend geschützt ist und daher auch nicht an heißen Maschinenteilen der Wellpappe-Herstellungsmaschine anhaften kann. Die äußeren Lagen 8 und 10 der Wellpappe 7 sind mit der gewellten Lage 9 in Verklebungsbereichen 16 verklebt.

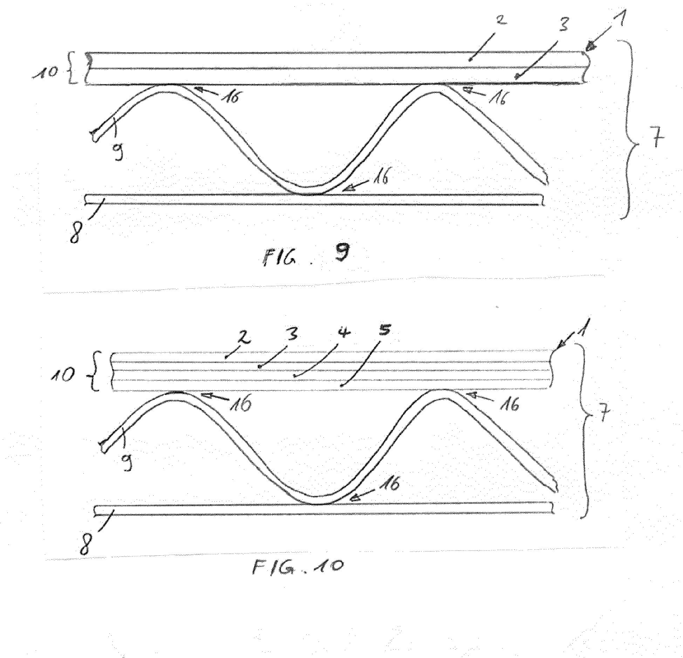

Gemäß einem weiteren, zweiten Ausführungsbeispiel der Wellpappe 7 kann auf die gemäß der Fig. 1 vorgesehene Haftvermittlerlage 4 und die Polyolefin-Schicht 5 verzichtet werden. Eine solche Ausführungsform der Wellpappe 7 ist in der Fig. 9 visualisiert, wobei das dort zur Anwendung kommende Verpackungsmaterial 1 lediglich die Papierlage 2 und als äußere Lage der Wellpappe 7 die Polyamidlage 3 aufweist. Die Papierlage 2 ist aus Primärfaser gefertigt, also frei von Mineralöl, und bildet eine äußerer Lage der Wellpappe 7, die beim verpackten Produkt dem Produkt zugewandt ist. Die Polyamidlage 3 ist mit der gewellten Lage 9 an ihren Berührungspunkten bzw. -bereichen (Verklebungsbereiche 16) verklebt. Ist die Papierlage 2 nicht mineralölfrei, so kann das Verpackungsmaterial 1 auch umgekehrt auf die gewellte Lage 9 aufgelegt werden, so dass die Papierlage 2 und die gewellte Lage 9 miteinander verklebt werden und die Polyamidlage 3 eine äußere, in Richtung des zu verpackenden Produkts zu verwendende Lage der Wellpappe 7 bildet.

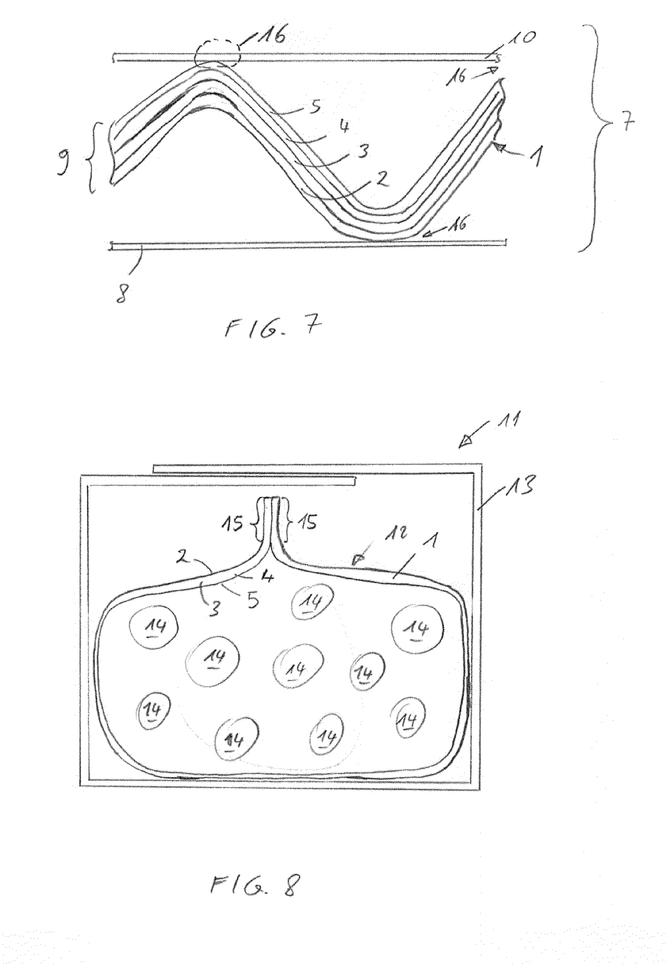

Fig. 7 zeigt eine Lagenstruktur eines weiteren, dritten Ausführungsbeispiels für die Wellpappe 7. Im vorliegenden Fall wurde als gewellte Lage 9 die Lagenstruktur des Verpackungsmaterials 1 gemäß der Fig. 1 verwendet. Die beiden ebenen Lagen 8 und 10 sind aus Papier oder Karton gefertigt. In diesem Ausführungsbeispiel kann die Polyolefin-Schicht 5 zum Verkleben der zweiten, gewellten Lage 9 mit der dritten (z.B. oberen), ebenen Lage 10 genutzt werden. Da die dritte, ebene Lage 10 innerhalb der Mineralöl-Barriere des Verpackungsmaterials 1 liegt ist sie aus Primärfaser gefertigt, also mineralölfrei. Dies stellt eine erhebliche Prozessverbesserung dar, weil auf das separate Einbringen von Klebstoff zum Verkleben der Lagen 9 und 10 verzichtet und die (Rest-)Wärme aus dem Prozess der Wellenbildung zum Verkleben an den Verklebungsbereichen 16 der oberen Lage 10 mit der gewellte Lage 9 genutzt werden kann.

Bei den zuvor beschriebenen Ausbildungsformen der Wellpappe 7 ist immer dann ein guter Schutz gegen Mineralöldiffusion gegeben, wenn die Polyamidlage 3 möglichst nahe an dem zu verpackenden Produkt gelegen ist.

Die Verwendung der erfindungsgemäßen Wellpappe 7 ist z.B. dann von Vorteil, wenn eine relativ hohe Zahl an kleinen Packgütern separat zu verpacken ist. In solch einem Fall müsste relativ viel Material des erfindungsgemäßen Verpackungsmaterials 1 für die individuelle Verpackung der Packgüter zur Anwendung kommen. Um dies zu vermeiden, wird die Verwendung des erfindungsgemäßen Verpackungsmaterials 1 mit seiner Eigenschaft als Mineralölbarriere in die äußere Verpackung, also die Schachtel gefertigt aus besagter Wellpappe 7 verlagert.

Fig. 10 zeigt eine Lagenstruktur eines weiteren, vierten Ausführungsbeispiels für die Wellpappe 7. Hierbei kommt bei dem Verpackungsmaterial 1 eine Lagenstruktur betrachtet von unten nach oben zum Einsatz, welche die Polyolefin-Schicht 5, die daran anschließende Haftvermittlerlage 4, die daran anschließende Polyamidlage 3 und die Papierlage 2 aufweist. Mit dieser Ausbildungsform geht der Vorteil einher, dass die Polyolefin-Schicht 5 mit Hilfe der im Herstellungsprozess der Wellpappe 7 herrschenden Wärme mit der Lage 9 in den Verklebungsbereichen 16 verschmitzt, also kein zusätzlicher Klebstoff zum aneinander Befestigen der Lagen 9 und 10 eingebracht werden muss. Als äußere Lage der Wellpappe 7 kommt besagte Papierlage 2 gefertigt aus Primärfaser, also frei von Mineralöl zum Einsatz. Diese Seite der Wellpappe 7 ist beim verpackten Produkt dem Produkt zugewandt.

In der Fig. 8 ist ein Verpackungssystem 11 dargestellt, das eine Primärverpackung 12 gefertigt aus dem erfindungsgemäßen Verpackungsmaterial 1 und eine Sekundärverpackung 13 gefertigt aus mineralölhaltigem Karton in Form einer Faltschachtel aufweist. Das Verpackungsmaterial 1 umschließt das Produkt 14 vollständig. Einander gegenüberliegende Ränder bzw. Randbereiche 15 des Verpackungsmaterials 1 sind durch heißversiegeln miteinander verbunden. Dort sind Bereiche der Polyolefin-Schicht 5 des Verpackungsmaterials 1 miteinander verschmolzen. Das Produkt 14 ist somit hermetisch verpackt und zuverlässig vor dem aus der Sekundärverpackung 13 ausdiffundierenden Mineralöl geschützt. Durch die unterschiedlichen Lage des Verpackungsmaterials, die sich in den angeführten Lagenstrukturen in Bezug auf ihre Funktionen gegenseitig synergetisch unterstützen, lassen sich auf vorteilhafte Weise Feuchtigkeits-Barriere, Sauerstoff-Barriere und Mineralöl-Barriere in einer Verpackung realisieren.

Abschließend sei erwähnt, dass in den erörterten Ausführungsbeispielen die Polyamidlage auch durch eine Polyamid-Folie realisiert sein kann.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Auch können individuell offenbarte Merkmale mit anderen Merkmalen kombiniert werden und Proportionen der dargestellten Merkmale variieren, ohne dass von dem Konzept der Erfindung abgewichen wird.

### BEZUGSZEICHENLISTE

- 1: Verpackungsmaterial
- 2: Papierlage
- 3: Polyamidlage
- 4: Haftvermittlerlage
- 5: Polyolefin-Schicht
- 6: Aluminiumfolie
- 7: Wellpappe
- 8: erste, ebene Lage
- 9: zweite, gewellte Lage
- 10: dritte, ebene Lage
- 11: Verpackungssystem
- 12: Primärverpackung
- 13: Sekundärverpackung
- 14: Produkt (Lebensmittel)
- 15: Rand bzw. Randbereich
- 16: Verklebungsbereich

## Patentansprüche

1. Verpackungsmaterial (1), aufweisend zumindest eine **Trägerlage** als Papierlage (2) und eine **Mineralöl-Barrierelage** als Polyamidlage (3).

2. Verpackungsmaterial (1) nach Anspruch 1, wobei die Polyamidlage (3) eingebettet zwischen eine erste Papierlage (2) und eine zweite Papierlage (2) ist.

3. Verpackungsmaterial (1) nach Anspruch 1 oder 2, wobei die Papierlage (2) eine flächenbezogene Masse **(Grammatur) -** von 20 g/m^2 bis 120 g/m^2 aufweist und/oder die Polyamidlage (3) eine flächenbezogene Masse von 5 g/m^2 bis 40 g/m^2 aufweist.

4. Verpackungsmaterial (1) nach einem der vorangehenden Ansprüche, das an einer Außenseite eine **Siegellage,** insbesondere durch eine Polyolefin-Schicht (5) gebildet, aufweist.

5. Verpackungsmaterial (1) nach Anspruch 4, wobei
- die Siegellage direkt auf die Papierlage (2) aufgebracht ist oder
- die Siegellage mit Hilfe einer **Haftvermittlerlage (4),** insbesondere mit einer flächenbezogenen Masse von 2 g/m^2 bis 3 g/m^2, an der Polyamidlage (3) anhaftet oder
- die Siegellage an einer weiteren Lage (6), bevorzugt mit Hilfe einer Haftvermittlerlage (4) anhaftet.

6. Verpackungsmaterial (1) nach einem der vorangehenden Ansprüche, wobei zusätzlich zu der Papierlage (2) und der Polyamidlage (3) eine **Metalllage,** insbesondere als Aluminiumfolie (6) ausgebildet ist.

7. Verpackungsmaterial (1) nach einem der vorangehenden Ansprüche, wobei zwischen die Papierlage (2) und die Polyamidlage (3) eine **Feuchtigkeit-Barrierelage,** bevorzugt als Kunststofflage, insbesondere bevorzugt als Polyolefin-Schicht (5) integriert ist.

8. Verpackungsmaterial (1) nach einem der vorangehenden Ansprüche, wobei die Papierlage (2) mineralölfrei, bevorzugt hergestellt aus Primärfaser ist.

9. Herstellungsverfahren zur Herstellung eines Verpackungsmaterials (1), wobei benachbart zu zumindest einer Trägerlage als Papierlage (2) eine Mineralöl-Barrierelage als Polyamidlage (3) hergestellt wird.

10. Herstellungsverfahren nach Anspruch 9, wobei die Polyamidlage (3) mit einer weiteren Papierlage (2) abgedeckt wird.

11. Herstellungsverfahren nach einem der Ansprüche 9 bis 10, wobei eine **Siegellage,** insbesondere durch eine Polyolefin-Schicht (5) gebildet, an einer Außenseite des Verpackungsmaterials (1) hergestellt wird.

12. Herstellungsverfahren nach Anspruch 11, wobei
- die Siegellage (5) direkt benachbart zu der Papierlage (2) durch Co-Extrusion mit der Polyamidlage (3) hergestellt wird, oder
- die Siegellage (5) mit Hilfe einer Haftvermittlerlage, insbesondere mit einer flächenbezogenen Masse von 2 g/m^2 bis 3 g/m^2, an der Polyamidlage (3) angeklebt wird, wobei die Polyamidlage (3), die Haftvermittlerlage (4) und die Siegellage (5) durch Co-Extrusion erzeugt werden, oder
- Siegellage (5) benachbart zu einer weiteren Lage (6), bevorzugt unter Verwendung einer Haftvermittlerlage (4) zwischen der Siegellage (5) und der weiteren Lage (6) hergestellt wird.

13. Wellpappe (7) aufweisend zumindest eine Lage eines Verpackungsmaterials (1) nach einem der Ansprüche 1 bis 8, wobei das Verpackungsmaterial (1) zumindest eine **Trägerlage** als Papierlage (2) und eine **Mineralöl-Barrierelage** als Polyamidlage (3) aufweist.

14. Wellpappe (7) nach Anspruch 13, aufweisend:
- eine erste, ebene Lage (8), und
- eine zweite, gewellte Lage (9), und
- eine dritte, ebene Lage (10) gebildet aus dem Verpackungsmaterial (1).

15. Wellpappe (7) nach Anspruch 13 oder 14, aufweisend:
- eine erste, ebene Lage (8), und
- eine zweite, gewellte Lage (9) gebildet aus dem Verpackungsmaterial (1), und
- eine dritte, ebene Lage (10).

16. Verpackungssystems (11) aufweisend
- eine Primärverpackung (12), die aus dem Verpackungsmaterial (1) gemäß einem der Ansprüche 1 bis 8 hergestellt ist und ein Produkt (14) hermetisch dicht verpackt, wobei das Verpackungsmaterial (1) zumindest eine **Trägerlage** als Papierlage (2) und eine **Mineralöl-Barrierelage** als Polyamidlage (3) aufweist, und
- eine die Primärverpackung (12) zumindest bereichsweise umschließende Sekundärverpackung (13), die einen Anteil an migrationsfähigem Mineralöl aufweist.

17. Lebensmittel (14) verpackt mit einem Verpackungsmaterial (1) nach einem der Ansprüche 1 bis 8, wobei das Verpackungsmaterial (1) zumindest eine **Trägerlage** als Papierlage (2) und eine **Mineralöl-Barrierelage** als Polyamidlage (3) aufweist.
